# EUROPÄISCHE PATENTSCHRIFT

(11) **EP 2 941 675 B1**
(45) Veröffentlichungstag und Bekanntmachung des Hinweises auf die Patenterteilung: **03.08.2022**
(21) Anmeldenummer: 14702776.7
(22) Anmeldetag: 22.01.2014
(51) Int. Cl.: G05B 13/02

(54) **VERFAHREN ZUR RECHNERGESTÜTZTEN STEUERUNG UND/ODER REGELUNG EINES TECHNISCHEN SYSTEMS**
METHOD FOR THE COMPUTERIZED CONTROL AND/OR REGULATION OF A TECHNICAL SYSTEM
PROCÉDÉ DE COMMANDE ET/OU DE RÉGULATION, ASSISTÉE PAR ORDINATEUR, D'UN SYSTÈME TECHNIQUE

(30) Priorität: 26.03.2013 DE 102013205356
(43) Veröffentlichungstag der Anmeldung: 11.11.2015
(73) Patentinhaber: Siemens Aktiengesellschaft, 80333 München (DE)
(72) Erfinder: DÜLL, Siegmund, 80336 München (DE); UDLUFT, Steffen, 82223 Eichenau (DE); BRUMMEL, Hans-Gerd, 13465 Berlin (DE); SINGH, Jatinder P., Charlotte NC 28277 (US); STERZING, Volkmar, 85579 Neubiberg (DE)
(86) Internationale Anmeldenummer: PCT/EP2014/051186
(87) Internationale Veröffentlichungsnummer: WO 2014/154374

(56) Entgegenhaltungen:
- WO-A1-2011/129805
- DE-A1-102007 001 024
- DE-A1-102010 011 221
- DE-T2- 60 120 192
- US-A1- 2011 004 390

## Beschreibung

Die Erfindung betrifft ein Verfahren zur rechnergestützten Steuerung und/oder Regelung eines technischen Systems sowie ein entsprechendes Computerprogrammprodukt

Zur Steuerung bzw. Regelung von technischen Systemen sind aus dem Stand der Technik verschiedene rechnergestützte Verfahren bekannt. Diese Verfahren geben für einen aktuellen Zustand des technischen Systems an, welche Aktion am technischen System auszuführen ist. Ein Zustand wird dabei durch eine Anzahl von Zustandsvariablen und eine Aktion durch eine Anzahl von Aktionsvariablen beschrieben. Neben einfachen tabellen-basierten Reglern, welche Zuständen des technischen Systems über eine Tabelle entsprechende Aktionen zuordnen, gibt es auch Regler, deren Aktionsauswahlregel mit einem maschinellen Lernverfahren gelernt wurde, z.B. basierend auf einem rekurrenten neuronalen Netz. Ein Anwendungsfall solcher Regler sind Gasturbinen, um Parameter der Turbine, wie Wirkungsgrad, Brennkammerdynamik, Schadstoffemissionen, zu optimieren. Ein weiterer Anwendungsfall dieser Regler ist die Steuerung einer Windturbine, wobei in diesem Fall z.B. der Verschleiß und der Wirkungsgrad optimiert werden.

Die Druckschrift WO 2011/129805 A1 - Sterzing et al. "METHOD FOR COMPUTER-AIDED CLOSED-LOOP AND/OR OPEN-LOOP CONTROL OF A TECHNICAL SYSTEM" zeigt ein Steuerungsverfahren für Gasturbinen, bei dem ein datenbasiertes Verfahren und ein analytisches Verfahren zum Auffinden und Anwenden optimierter Steuerungsparameter kombiniert werden, wobei die mit dem datenbasierten Verfahren aufgefundenen Steuerungsparameter umso mehr in einen kombinierten Steuerungsparameter eingehen, desto höher ein Konfidenzwert für den datenbasiert aufgefundenen Steuerungsparameter ist.

Zur Realisierung von maschinell gelernten Aktionsauswahlregeln sind Trainingsdaten erforderlich, welche für eine Vielzahl von Zuständen und in diesen Zuständen durchgeführten Aktionen entsprechende Folgezustände spezifizieren. Zur Generierung von neuen Trainingsdaten ist es erforderlich, dass das technische System in noch unbekannten Zuständen betrieben wird. Dabei ist jedoch sicherzustellen, dass diese neuen Zustände den Betrieb des technischen Systems nicht stören bzw. stark verschlechtern und insbesondere nicht zu Fehlfunktionen des technischen Systems führen.

Aufgabe der Erfindung ist es deshalb, ein Verfahren zur Steuerung und/oder Regelung eines technischen Systems zu schaffen, mit dem neue Zustände des technischen Systems exploriert werden können, ohne dass der Betrieb des technischen Systems beeinträchtigt wird.

Diese Aufgabe wird durch die unabhängigen Patentansprüche gelöst. Weiterbildungen der Erfindung sind in den abhängigen Ansprüchen definiert.

Das erfindungsgemäße Verfahren dient zur Steuerung und/oder Regelung eines technischen Systems, wobei die Steuerung bzw. Regelung zu jeweiligen Zeitpunkten Aktionen umfassend eine oder mehrere Aktionsvariablen am technischen System in Abhängigkeit von einem oder mehreren Zuständen des technischen Systems umfassend jeweils eine oder mehrere Zustandsvariablen ausführt.

Im Rahmen des erfindungsgemäßen Verfahrens bestimmt in einem Schritt a) ein vorgegebenes Regelverfahren zu jeweiligen Zeitpunkten in Abhängigkeit von zumindest dem Zustand des technischen Systems zum jeweiligen Zeitpunkt (d.h. gegebenenfalls auch in Abhängigkeit von Zuständen zu früheren Zeitpunkten) am technischen System auszuführende erste Aktionen.

Gemäß einem Schritt b) bestimmt zumindest eine Explorationsregel in Abhängigkeit von zumindest dem Zustand des technischen Systems zum jeweiligen Zeitpunkt eine oder mehrere zweite, am technischen System auszuführende Aktionen. Bei mehreren Explorationsregeln ermittelt jede Explorationsregel separat eine zweite Aktion. Die Explorationsregeln können beliebig festgelegt sein, und weiter unten werden Beispiele solcher Regeln gegeben. Gemäß der Explorationsregel werden nach bestimmten Kriterien zweite Aktionen festgelegt, mit denen Zustände des technischen Systems angefahren werden.

In einem Schritt c) wird basierend auf einem Simulationsmodell des technischen Systems für jede zweite Aktion eine Menge von daraus resultierenden Folgezuständen des technischen Systems prädiziert. Solche Simulationsmodelle sind an sich aus dem Stand der Technik bekannt. Der Begriff der Menge von Folgezuständen ist weit zu verstehen und kann gegebenenfalls auch nur einen Folgezustand zu dem Zeitpunkt umfassen, der direkt auf dem jeweiligen (aktuellen) Zeitpunkt folgt. Vorzugsweise umfasst die Menge von Folgezuständen jedoch mehrere zukünftige Folgezustände. Beispielsweise können die Folgezustände für ein vorbestimmtes zukünftiges Zeitintervall mit dem Simulationsmodell prädiziert werden.

In einem Schritt d) wird für jede Menge der in Schritt c) prädizierten Folgezustände überprüft, ob die jeweilige Menge von Folgezuständen ein vorgegebenes Schwellwertkriterium erfüllt, welches einzuhaltende Schwellen für zumindest einen Teil der Zustandsvariablen der jeweiligen Menge von Folgezuständen festlegt.

Falls in einem Schritt e) eine oder mehrere Mengen von Folgezuständen das Schwellwertkriterium erfüllen, wird dem vorgegebenen Regelverfahren eine zweite Aktion zugeführt, für welche die prädizierte Menge von Folgezuständen das Schwellwertkriterium erfüllt. Sofern es mehrere solcher zweiter Aktionen gibt, können wiederum entsprechende Kriterien festgelegt sein, mit denen spezifiziert wird, welche dieser zweiten Aktionen dem Regelverfahren zugeführt werden. Steht die Exploration des Zustandsraums im Vordergrund, werden vorzugsweise solche zweiten Aktionen dem Regelverfahren zugeführt, deren Folgezustände in der Nähe der entsprechenden Schwellen liegen. Steht die Sicherheit des Betriebs des technischen Systems im Vordergrund, werden eher solche zweiten Aktionen dem Regelverfahren zugeführt, deren Folgezustände weit entfernt von den entsprechenden Schwellen des Schwellwertkriteriums sind. Schließlich führt das vorgegebene Regelverfahren als Aktion die zugeführte zweite Aktion anstatt der ersten Aktion oder die in Schritt a) bestimmte erste Aktion in Kombination mit der zweiten Aktion am technischen System aus.

Das erfindungsgemäße Verfahren ermöglicht die Implementierung einer Explorationsregel im geregelten bzw. gesteuerten Betrieb eines technischen Systems, wobei gleichzeitig durch Festlegung entsprechender Schwellwerte für Zustandsvariablen von über ein Simulationsmodell prädizierten Folgezuständen gewährleistet ist, dass der Betrieb des technischen Systems nicht negativ beeinflusst wird und somit neue Zustände unmerklich im Rahmen des Betriebs des technischen Systems angefahren werden. Hierdurch werden neue Trainingsdaten basierend auf den neuen Zuständen mit den in diesen Zuständen ausgeführten Aktionen und den Folgezuständen generiert, welche zu einem späteren Zeitpunkt zum maschinellen Lernen von Simulationsverfahren bzw. Regelverfahren genutzt werden können. Im Betrieb des technischen System werden demzufolge die in Schritt e) ausgeführten Aktionen in Kombination mit dem entsprechenden Zustand und dem sich real ergebenden Folgezustand gespeichert bzw. ausgegeben.

Je nach Ausgestaltung können im Falle, dass keine der Mengen von Folgezuständen in Schritt e) das Schwellwertkriterium erfüllen, bestimmte Maßnahmen eingeleitet werden. In einem Fall führt das vorgegebene Regelverfahren die in Schritt a) bestimmte erste Aktion aus. Ebenso können eine oder mehrere modifizierte Aktionen bestimmt werden, für welche die oben beschriebenen Schritte c) bis e) durchgeführt werden. Das Kriterium, wie modifizierte zweite Aktionen bestimmt werden, kann beliebig festgelegt sein. Beispielsweise kann ein Prozentsatz spezifiziert werden, mit dem eine ursprünglich in Schritt b) ermittelte zweite Aktion abgeändert wird. In einer weiteren Variante werden die Schritte b) bis e) des Verfahrens nochmals durchgeführt. Dies ist beispielsweise dann sinnvoll, wenn die Explorationsregel zufällig ist und für den gleichen Zustand nicht immer die gleiche zweite Aktion bestimmt bzw. wenn bei der nochmaligen Ausführung der Schritte b) bis e) andere Explorationsregeln verwendet werden.

In einer besonders bevorzugten Ausführungsform stellen die in Schritt b) bestimmten zweiten Aktionen eine Variation der in Schritt a) bestimmten ersten Aktionen dar. Dabei wird in Schritt e) am technischen System als Aktion die mittels der Variation der zugeführten zweiten Aktion variierte erste Aktion ausgeführt. Die Exploration des Zustandsraums ist somit nach Art einer Offset-Regelung realisiert, welche entsprechende erste Aktionen gegebenenfalls verändert. Nichtsdestotrotz besteht auch die Möglichkeit, dass die zweite Aktion derart definiert ist, dass sie bei deren Verwendung die erste Aktion ersetzt.

In einer weiteren Ausgestaltung des erfindungsgemäßen Verfahrens gibt das Schwellwertkriterium für zumindest einen Teil der Zustandsvariablen der Folgezustände jeweilige Wertebereiche an, innerhalb derer die Werte dieser Zustandsvariablen liegen müssen. Die Wertebereiche können dabei absolut festgelegt sein, jedoch gegebenenfalls auch von den Werten der Zustandsvariablen der Folgezustände abhängen und insbesondere eine prozentuelle Abweichung von diesen Werten definieren.

Wie bereits oben erwähnt, kann die zumindest eine Explorationsregel je nach Ausgestaltung des Verfahrens unterschiedlich festgelegt sein. Insbesondere kann die zumindest eine Explorationsregel eine oder mehrere der folgenden Regeln umfassen:
- eine Regel, welche die zweite Aktion zufällig auswählt;
- eine Regel, welche auf Expertenwissen basiert;
- eine ε-Greedy-Regel.

Ebenso können die in den Druckschriften [1] bis [3] beschriebenen Explorationsregeln eingesetzt werden.

In einer weiteren Ausgestaltung des erfindungsgemäßen Verfahrens ist das Simulationsmodell mit einem maschinellen Lernverfahren gelernt und basiert insbesondere auf einem gelernten neuronalen Netz, vorzugsweise einem rekurrenten neuronalen Netz. Solche Simulationsmodelle sind hinlänglich aus dem Stand der Technik bekannt (siehe z.B. Druckschrift [4]).

Das vorgegebene Regelverfahren, welches im Rahmen der Erfindung verwendet wird, kann beliebig ausgestaltet sein. Insbesondere werden hierbei an sich bekannte Regelverfahren verwendet. Vorzugsweise ist das vorgegebene Regelverfahren eines der folgenden Verfahren:
- ein tabellen-basiertes Regelverfahren, in dem mittels einer Tabelle jeweilige Zustände des technischen Systems den ersten Aktionen zugeordnet sind;
- eine mit einem maschinellen Lernverfahren gelernte Aktionsauswahlregel, z.B. basierend auf dem Verfahren der Druckschrift [4];
- eine Kombination aus einem tabellen-basierten Regelverfahren und einer mit einem maschinellen Lernverfahren gelernten Aktionsauswahlregel, wobei die Aktionsauswahlregel vorzugsweise eine Variation einer mit dem tabellen-basierten Regelverfahren bestimmten Aktion angibt und die erste Aktion vorzugsweise die mittels der Variation variierte Aktion des tabellen-basierten Regelverfahrens ist.

Das erfindungsgemäße Verfahren eignet sich insbesondere zur Steuerung bzw. Regelung einer Gasturbine und/oder Windturbine. Vorzugsweise umfasst dabei ein Zustand der Gasturbine eine oder mehrere der folgenden Zustandsvariablen:
- die Temperatur und/oder den Druck an einer oder mehreren Stellen an der Gasturbine, insbesondere die Umgebungstemperatur und/oder den Umgebungsdruck und/oder die Kompressortemperatur und/oder den Kompressordruck und/oder die Temperatur in der Brennkammer und/oder den Druck in der Brennkammer;
- die Luftfeuchtigkeit an einer oder mehreren Stellen an der Gasturbine;
- Brennkammerbeschleunigungen in der Gasturbine;
- die Schadstoffemission der Gasturbine, insbesondere die Stickoxid-Emission;
- die durch die Gasturbine erzeugte Leistung.

Im Falle einer Gasturbine umfassen die Aktionsvariable bzw. Aktionsvariablen der an der Gasturbine auszuführenden ersten und/oder zweiten Aktionen vorzugsweise eine Veränderung der Einstellung von einem oder mehreren Kraftstoff-Einspritzventilen und/oder eine Veränderung der Position von einer oder mehreren Schaufeln, insbesondere von Vorleitschaufeln, und/oder eine Veränderung von einem oder mehreren Kühlluftströmen in Gasturbinen.

Um einen ungestörten Betrieb einer Gasturbine im Rahmen der erfindungsgemäßen Exploration des Zustandsraums zu gewährleisten, sind die Zustandsvariable oder Zustandsvariablen in Schritt d), für welche einzuhaltende Schwellen festgelegt sind, vorzugsweise die Brennkammerbeschleunigungen in der Gasturbine und/oder die Schadstoffemission der Gasturbine.

Im Falle eines technischen Systems in der Form einer Windturbine umfasst ein Zustand der Windturbine vorzugsweise eine oder mehrere der folgenden Zustandsvariablen:
- die Temperatur und/oder den Druck und/oder die Luftfeuchtigkeit an einer oder mehreren Stellen an der Windturbine, insbesondere die Umgebungstemperatur und/oder den Umgebungsdruck und/oder die Umgebungsluftfeuchtigkeit;
- die Windstärke an der Windturbine;
- die Amplitude der Turmschwingungen der Windturbine;
- die mechanische Belastung der Rotorblätter der Windturbine;
- die durch die Windturbine erzeugte Leistung.

Im Falle einer Windturbine umfassen die Aktionsvariable oder Aktionsvariablen der an der Windturbine auszuführenden ersten und/oder zweiten Aktionen vorzugsweise eine Veränderung der Anstellwinkel der Rotorblätter des Rotors der Windturbine und/oder eine Veränderung der Ausrichtung des Rotors der Windturbine zum Wind.

Ein ungestörter Betrieb der Windturbine im Rahmen des erfindungsgemäßen Verfahrens wird insbesondere dann gewährleistet, wenn die Zustandsvariable oder Zustandsvariablen in Schritt d), für welche einzuhaltende Schwellen festgelegt sind, die Amplitude der Turmschwingungen der Windturbine und/oder die mechanische Belastung der Rotorblätter der Windturbine umfassen.

Neben dem oben beschriebenen Verfahren betrifft die Erfindung ferner ein Computerprogrammprodukt mit einem auf einem maschinenlesbaren Träger gespeicherten Programm zur Durchführung des erfindungsgemäßen Verfahrens bzw. einer oder mehrerer bevorzugter Varianten des erfindungsgemäßen Verfahrens, wenn das Programm auf einem Rechner abläuft.

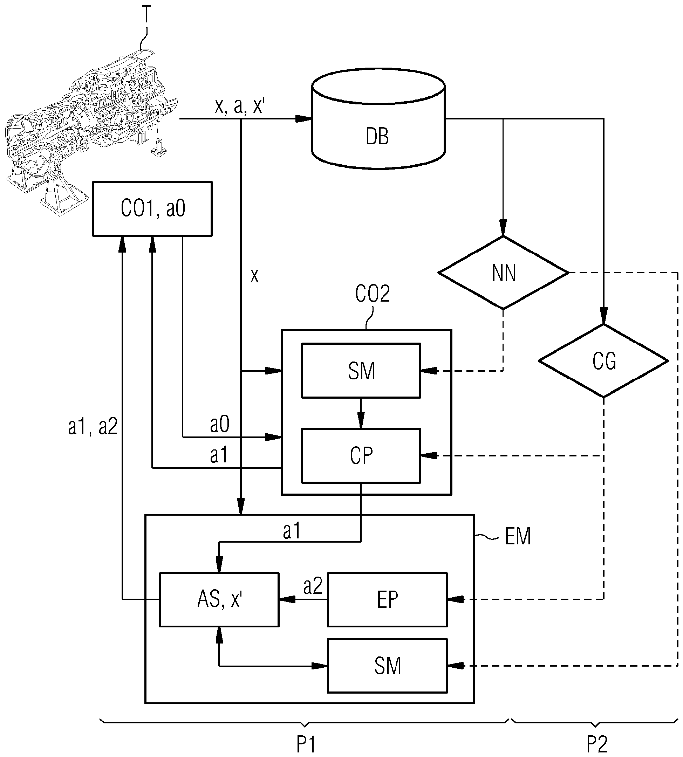

Ein Ausführungsbeispiel der Erfindung wird nachfolgend anhand der beigefügten Fig. 1 detailliert beschrieben. Diese Figur zeigt eine schematische Darstellung des Ablaufs einer Ausführungsform des erfindungsgemäßen Verfahrens.

Die Erfindung wird gemäß Fig. 1 anhand der Steuerung eines technischen Systems T in der Form einer Gasturbine erläutert. Im linken Teil P1 der Fig. 1 ist dabei eine Ausführungsform des erfindungsgemäßen Regelverfahrens wiedergegeben, welches online im Betrieb der Gasturbine durchgeführt wird. Demgegenüber sind im rechten Teil P2 der Fig. 1 Verfahrensschritte wiedergegeben, mit denen Teile des Verfahrens im Abschnitt P1 erzeugt werden. Die Verfahrensschritte im Abschnitt P2 werden dabei offline (d.h. nicht im Betrieb des technischen Systems) durchgeführt und stellen in diesem Sinne vorbereitende Schritte zur Implementierung des erfindungsgemäßen Verfahrens auf einer Gasturbine dar.

Das Steuerverfahren der Turbine im Abschnitt P1 umfasst ein herkömmliches Regelverfahren basierend auf einem ersten Regler CO1 sowie einem zweiten Regler CO2. Der erste Regler CO1 ist in an sich bekannter Weise als tabellen-basierter Regler realisiert und gibt für einen Zustand x der Gasturbine zum aktuellen Zeitpunkt eine an der Turbine auszuführende Aktion a0 aus. Dabei sind in der Tabelle für entsprechende Zustände die hierfür auszuführenden Aktionen hinterlegt. Der zweite Regler CO2 ist in der Form einer gelernten Aktionsauswahlregel realisiert. Die Zustände der Gasturbine umfassen dabei eine oder mehrere der oben beschriebenen Zustandsvariablen einer Gasturbine und die Aktionen betreffen die Veränderungen von einer oder mehreren Stellgrößen der Gasturbine. Diese Stellgrößen sind vorzugsweise die Veränderung der Einstellung von Kraftstoffverhältnissen über eine oder mehrere Kraftstoff-Einspritzventile sowie die Veränderung der Position von Schaufeln in der Gasturbine und insbesondere von Vorleitschaufeln, wie ebenfalls im Vorangegangenen beschrieben wurde.

Gemäß Fig. 1 ermittelt der Regler CO1 somit durch Zugriff auf eine Tabelle ausgehend von aktuellen Zustand x der Gasturbine eine Aktion a0. Der aktuelle Zustand x und die Aktion a0 werden dem Regler CO2 in der Form einer gelernten Aktionsauswahlregel zugeführt. Diese Regel umfasst ein Simulationsmodell SM der Gasturbine, die das dynamische Verhalten der Turbine modelliert. Dieses Simulationsmodell wechselwirkt mit einer Steuerregel CP, welche in Abhängigkeit von dem aktuellen Zustand x der Gasturbine eine optimale erste Aktion a1 unter Berücksichtigung der Aktion a0 ermittelt, wobei die Optimalität einer Aktion basierend auf einer geeigneten Reward-Funktion festgelegt ist. Das Simulationsmodell SM wurde vorab über ein neuronales Netz NN gelernt, welches auf eine Datenbank DB zugreift, in der Trainingsdaten in der Form von vormals vom technischen System eingenommenen Zuständen x, in diesen Zuständen ausgeführten Aktionen a und daraus resultierenden Folgezuständen x' hinterlegt sind. Ebenso wurde die Steuerregel CP über einen Kontrollgenerator CG generiert, der auf die Trainingsdaten aus der Datenbank DB zugreift.

Der Regler CO2 gibt somit in Abhängigkeit von einer aktuellen Aktion x eine am technischen System durchzuführende Aktion a1 aus. Solche Arten von Reglern sind an sich aus dem Stand der Technik bekannt und werden deshalb nicht im Detail beschrieben. Insbesondere kann der Regler CO2 auf einem rekurrenten neuronalen Netz basieren, wie dies beispielsweise in der Druckschrift [4] beschrieben ist. In der hier beschriebenen Ausführungsform des Reglers ist dieser als sog. Offset-Regler realisiert, der einen Offset bzw. eine Variation angibt, die zu der Aktion a0 hinzuaddiert wird, wodurch die erste Aktion a1 erhalten wird. Herkömmlicherweise wird diese Aktion a1 dem Regler CO1 zugeführt, der diese Aktion dann als Aktion a am technischen System ausführt. Die von der Gasturbine eingenommenen Zustände x sowie die in diesen Zuständen ausgeführten Aktionen a mit daraus resultierenden Folgezuständen x' werden in der bereits oben erwähnten Datenbank DB hinterlegt, welche wiederum zum Lernen des neuronalen Netzes NN bzw. des Kontrollgenerators CG genutzt werden kann.

Im Rahmen des erfindungsgemäßen Verfahrens ist als weiteres Modul ein sog. Explorationsmodul EM vorgesehen, welches bei Bedarf zugeschaltet werden kann und somit im Rahmen der Regelung der Gasturbine verwendet werden kann. Beim Zuschalten des Explorationsmoduls wird die erste Aktion a1 nicht mehr direkt dem Regler CO1 zugeführt, sondern sie wird dem Explorationsmodul EM und dort dem Aktionsauswahl-Modul AS übergeben. Ferner erhält das Explorationsmodul den aktuellen Zustand x der Gasturbine. Das Explorationsmodul EM dient dazu, den Raum der Zustände der Gasturbine zu explorieren, d.h. nach Zuständen zu suchen, welche von der Gasturbine noch nicht eingenommen wurden. Da dieses Modul im laufenden Betrieb des technischen Systems eingesetzt wird, ist sicherzustellen, dass die Exploration von neuen Zuständen unmerklich erfolgt. Das heißt, die neuen Zustände müssen derart gewählt sein, dass der Betrieb der Gasturbine nicht merklich verschlechtert wird. Insbesondere sollten die Schadstoffemissionen bzw. die Brennkammerbeschleunigungen und damit das Brennkammerbrummen nicht zu sehr ansteigen.

In dem Explorationsmodul EM ist eine Explorationsregel EP hinterlegt, die je nach Ausgestaltung unterschiedlich festgelegt sein kann. Die Explorationsregel gibt dabei basierend auf dem aktuellen Zustand x der Gasturbine eine zweite Aktion a2 an, bei der es sich wiederum um einen Offset bzw. eine Variation handelt, welche im Falle, dass die Explorationsregel zur Anwendung kommt, zu der ersten Aktion a1 hinzuaddiert wird. Die Explorationsregel kann je nach Anwendungsfall auf verschiedene Art und Weise realisiert sein. Insbesondere kann sie zufällig ausgehend vom aktuellen Zustand x eine zweite Aktion a2 bestimmen. Ebenso kann die Explorationsregel basierend auf den Verfahren der Druckschriften [1] bis [3] festgelegt sein bzw. eine an sich bekannte ε-Greedy-Exploration sein. Ebenso kann die Explorationsregel gegebenenfalls durch Expertenwissen festgelegt sein.

Die mit der Explorationsregel ermittelte zweite Aktion a2 wird dem Aktions-Auswahl-Modul AS zugeführt, welches mit einem Simulationsmodell SM der Gasturbine wechselwirkt. Dieses Simulationsmodell entspricht dem Simulationsmodell des Reglers CO2 und wurde über das Lernen des neuronalen Netzes NN bestimmt. In dem Aktions-Auswahl-Modul AS wird nunmehr mittels des Simulationsmodells SM ermittelt, zu welchen Folgezuständen x' des technischen Systems die Anwendung der mit der Aktion a2 variierten Aktion a1 führt. Dabei werden die Folgezustände für ein vorbestimmtes zukünftiges Zeitintervall betrachtet.

In dem Aktions-Auswahl-Modul AS sind vorbestimmte Wertebereiche für bestimmte Zustandsvariablen der Folgezustände der Gasturbine hinterlegt. Insbesondere ist dabei ein oberer Schwellwert für das Brennkammerbrummen bzw. die Stickoxid-Emissionen festgelegt. Wird dieser Schwellwert der Zustandsvariablen durch zumindest einen der Folgezustände überschritten, ist die zweite Aktion a2 nicht zulässig. In diesem Fall wird durch das Aktions-Auswahl-Modul die ursprünglich ermittelte Aktion a1 an den Regler CO1 gegeben, der dann diese Aktion ausführt. Werden demgegenüber die entsprechenden Schwellwerte der Zustandsvariablen der Folgezustände nicht überschritten, wird dem Regler CO1 neben der Aktion a1 die durch die Explorationsregel EP ermittelte zweite Aktion a2 zugeführt. Der Regler führt dann die Summe der beiden Aktionen aus. Auf diese Weise wird sichergestellt, dass eine Exploration des Zustandsraums der Gasturbine hin zu neuen Zuständen nur dann durchgeführt wird, wenn bestimmte Grenzwerte der Schadstoffemission und des Brennkammerbrummens nicht überschritten werden, so dass der Betrieb der Gasturbine nicht durch die Exploration beeinträchtigt wird. Die Exploration erfolgt somit unmerklich und wird durch den Operator der Gasturbine nicht wahrgenommen.

In Abwandlungen des soeben beschriebenen Verfahrens können gegebenenfalls auch mehrere Explorationsregeln EP in dem Explorationsmodul EM hinterlegt sein. Dabei werden mehrere zweite Aktionen a2 durch die Explorationsmodule bestimmt und anschließend alle zweiten Aktionen ermittelt, deren Folgezustände innerhalb der entsprechenden Grenzwerte der Zustandsvariablen liegen. Aus diesen zweiten Aktionen wird dann eine Aktion gemäß einem vorbestimmten Kriterium ausgewählt. Dies kann beispielsweise die Aktion sein, welche zu Folgezuständen führt, deren Zustandsvariablen am weitesten von den Schwellwerten entfernt sind, wenn die Priorität auf einen sicheren Betrieb des technischen Systems gerichtet ist. Ist demgegenüber die Priorität eine gute Exploration des Zustandsraums, kann auch diejenige zweite Aktion a2 verwendet werden, welche zu Folgezuständen führt, deren Zustandsvariablen am nächsten zu den entsprechenden Grenzwerten liegen. Das Explorationsmodul EM kann gegebenenfalls auch in einem Regelverfahren eingesetzt werden, welches nur den tabellen-basierten Regler CO1 verwendet. In diesem Fall entspricht die erste Aktion der Aktion a0, die an das Explorationsmodul EM gegeben wird und dort analog wie im Vorangegangenen beschrieben verarbeitet wird.

Die im Vorangegangenen beschriebene Ausführungsform des erfindungsgemäßen Verfahrens weist eine Reihe von Vorteilen auf. Insbesondere wird im Rahmen eines geregelten Betriebs eines technischen Systems unmerklich auch eine Exploration des Zustandsraums des technischen Systems zu neuen Zuständen erreicht. Diese neuen Zustände samt der darin ausgeführten Aktionen und den Folgezuständen erweitern somit die Menge an Daten über das technische System, die als Trainingsdaten in entsprechenden Verfahren zum Lernen von Simulationsmodellen bzw. Aktionsauswahlregeln des technischen Systems genutzt werden können. Im Rahmen der Exploration wird dabei sichergestellt, dass diese nicht zu unerwünschten Betriebszuständen des technischen Systems führt, welche unter Umständen Warnungen oder Alarme auslösen. Vielmehr ist die Exploration durch die Festlegung entsprechender Schwellwerte derart ausgestaltet, dass sie unmerklich erfolgt und den Betrieb des technischen Systems nicht negativ beeinflusst.

### Literaturverzeichnis:

[1] Michael Kearns and Satinder Singh, "Near-optimal reinforcement learning in polynomial time", in Proceedings of the 15th International Conference on Machine Learning, pp. 260--268, (1998).
[2] Ronen I. Brafman and Moshe Tennenholtz, "R-max - a general polynomial time algorithm for near-optimal reinforcement learning", Journal of Machine Learning Research, 3, 213--231, (2003).
[3] Alexander L. Strehl and Michael L. Littman, "An analysis of model-based interval estimation for markov decision processes.", Journal of Computer and System Sciences, 74(8), 1309--1331, (2008).
[4] DE 10 2007 001 025 A1

## Patentansprüche

1. Verfahren zur rechnergestützten Steuerung und/oder Regelung eines technischen Systems (T), wobei die Steuerung und/oder Regelung zu jeweiligen Zeitpunkten Aktionen (a) umfassend eine oder mehrere Aktionsvariablen am technischen System (T) in Abhängigkeit von einem oder mehreren Zuständen (x) des technischen Systems (T) umfassend jeweils eine oder mehrere Zustandsvariablen ausführt, wobei:
a) ein vorgegebenes Regelverfahren (CO1, CO2) zu jeweiligen Zeitpunkten in Abhängigkeit von zumindest dem Zustand (x) des technischen Systems (T) zum jeweiligen Zeitpunkt am technischen System (T) auszuführende erste Aktionen (a1) bestimmt;
b) zumindest eine Explorationsregel (EP) in Abhängigkeit von zumindest dem Zustand (x) des technischen Systems (T) zum jeweiligen Zeitpunkt eine oder mehrere zweite, am technischen System (T) auszuführende Aktionen (a2) bestimmt, um Zustände zu explorieren, die vom technischen System (T) noch nicht eingenommen wurden;
c) basierend auf einem Simulationsmodell (SM) des technischen Systems (T) für jede zweite Aktion (a2) eine Menge von daraus resultierenden Folgezuständen (x') des technischen Systems (T) prädiziert wird;
d) für jede Menge von Folgezuständen (x') überprüft wird, ob die jeweilige Menge von Folgezuständen (x') ein vorgegebenes Schwellwertkriterium erfüllt, welches einzuhaltende Schwellen für zumindest einen Teil der Zustandsvariablen der jeweiligen Menge von Folgezuständen (x') festlegt;
e) falls eine oder mehrere Mengen von Folgezuständen (x') das Schwellwertkriterium erfüllen, dem vorgegebenen Regelverfahren (CO1, CO2) eine zweite Aktion (a2) zugeführt wird, für welche die prädizierte Menge von Folgezuständen (x') das Schwellwertkriterium erfüllt, woraufhin das vorgegebene Regelverfahren (CO1, CO2) als Aktion die zugeführte zweite Aktion (a2) anstatt der ersten Aktion (a1) oder die in Schritt a) bestimmte erste Aktion (a1) in Kombination mit der zweiten Aktion (a2) am technischen System (T) ausführt.

2. Verfahren nach Anspruch 1, bei dem im Falle, dass keine der Mengen von Folgezuständen (x') in Schritt e) das Schwellwertkriterium erfüllt, das vorgegebene Regelverfahren (CO1, CO2) die in Schritt a) bestimmte erste Aktion (a1) ausführt und/oder eine oder mehrere modifizierte zweite Aktionen (a2) bestimmt werden, für welche die Schritte c) bis e) durchgeführt werden, und/oder nochmals die Schritte b) bis e) durchgeführt werden.

3. Verfahren nach Anspruch 1 oder 2, bei dem die in Schritt b) bestimmten zweiten Aktionen (a2) jeweils eine Variation der in Schritt a) bestimmten ersten Aktion (a1) darstellen und in Schritt e) am technischen System (T) als Aktion (a) die mittels der Variation der zugeführten zweiten Aktion (a2) variierte erste Aktion (a1) ausgeführt wird.

4. Verfahren nach einem der vorhergehenden Ansprüche, bei dem das Schwellwertkriterium für zumindest einen Teil der Zustandsvariablen der Folgezustände (x') jeweilige Wertebereiche angibt, innerhalb derer die Werte dieser Zustandsvariablen liegen müssen.

5. Verfahren nach Anspruch 4, **dadurch gekennzeichnet, dass** die Wertebereiche von den Werten der Zustandsvariablen der Folgezustände (x') abhängen und insbesondere eine prozentuale Abweichung von diesen Werten definieren.

6. Verfahren nach einem der vorhergehenden Ansprüche, bei dem die zumindest eine Explorationsregel (EP) eine oder mehrere der folgenden Regeln umfasst:
- eine Regel, welche die zweite Aktion (a2) zufällig auswählt;
- eine Regel, welche auf Expertenwissen basiert;
- eine ε-Greedy-Regel.

7. Verfahren nach einem der vorhergehenden Ansprüche, bei dem das Simulationsmodell (SM) mit einem maschinellen Lernverfahren gelernt ist und insbesondere auf einem gelernten neuronalen Netz, vorzugsweise einem rekurrenten neuronalen Netz, basiert.

8. Verfahren nach einem der vorhergehenden Ansprüche, bei dem das vorgegebene Regelverfahren eines der folgenden Verfahren ist:
- ein tabellen-basiertes Regelverfahren (CO1), in dem mittels einer Tabelle jeweilige Zustände (x) des technischen Systems (T) ersten Aktionen (a1) zugeordnet sind;
- eine mit einem maschinellen Lernverfahren gelernte Aktionsauswahlregel (CO2);
- eine Kombination aus einem tabellen-basierten Regelverfahren (CO1) und einer mit einem maschinellen Lernverfahren gelernten Aktionsauswahlregel (CO2), wobei die Aktionsauswahlregel vorzugsweise eine Variation einer mit dem tabellen-basierten Regelverfahren (CO1) bestimmten Aktion (a0) angibt und die erste Aktion (a1) vorzugsweise die mittels der Variation variierte Aktion des tabellen-basierten Regelverfahrens (CO1) ist.

9. Verfahren nach einem der vorhergehenden Ansprüche, bei dem das technische System (T) eine Gasturbine und/oder Windturbine ist.

10. Verfahren nach Anspruch 9, bei dem ein Zustand (x) der Gasturbine eine oder mehrere der folgenden Zustandsvariablen umfasst:
- die Temperatur und/oder den Druck an einer oder mehreren Stellen an der Gasturbine, insbesondere die Umgebungstemperatur und/oder den Umgebungsdruck und/oder die Kompressortemperatur und/oder den Kompressordruck und/oder die Temperatur in der Brennkammer und/oder den Druck in der Brennkammer;
- die Luftfeuchtigkeit an einer oder mehreren Stellen an der Gasturbine;
- Brennkammerbeschleunigungen in der Gasturbine;
- die Schadstoffemission der Gasturbine, insbesondere die Stickoxid-Emission;
- die durch die Gasturbine erzeugte Leistung.

11. Verfahren nach Anspruch 9 oder 10, bei dem die Aktionsvariable oder Aktionsvariablen der an der Gasturbine auszuführenden ersten und/oder zweiten Aktionen (a) eine Veränderung der Einstellung von einem oder mehreren Kraftstoff-Einspritzventilen und/oder eine Veränderung der Position von einer oder mehreren Schaufeln und/oder eine Veränderung von einem oder mehreren Kühlluftströmen in der Gasturbine umfassen.

12. Verfahren nach Anspruch 10 oder 11, bei dem die Zustandsvariable oder Zustandsvariablen in Schritt d), für welche einzuhaltende Schwellen festgelegt sind, die Brennkammerbeschleunigungen in der Gasturbine und/oder die Schadstoffemission der Gasturbine umfassen.

13. Verfahren nach einem der Ansprüche 9 bis 12, bei dem ein Zustand (x) der Windturbine eine oder mehrere der folgenden Zustandsvariablen umfasst:
- die Temperatur und/oder den Druck und/oder die Luftfeuchtigkeit an einer oder mehreren Stellen an der Windturbine, insbesondere die Umgebungstemperatur und/oder den Umgebungsdruck und/oder die Umgebungsluftfeuchtigkeit;
- die Windstärke an der Windturbine;
- die Amplitude der Turmschwingungen der Windturbine;
- die mechanische Belastung der Rotorblätter der Windturbine;
- die durch die Windturbine erzeugte Leistung.

14. Verfahren nach einem der Ansprüche 9 bis 13, bei dem die Aktionsvariable oder Aktionsvariablen der an der Windturbine auszuführenden ersten und/oder zweiten Aktionen (a) eine Veränderung der Anstellwinkel der Rotorblätter des Rotors der Windturbine und/oder eine Veränderung der Ausrichtung des Rotors der Windturbine zum Wind umfassen.

15. Verfahren nach Anspruch 13 oder 14, bei dem die Zustandsvariable oder Zustandsvariablen in Schritt d), für welche einzuhaltende Schwellen festgelegt sind, die Amplitude der Turmschwingungen der Windturbine und/oder die mechanische Belastung der Rotorblätter der Windturbine umfassen.

16. Computerprogrammprodukt mit einem auf einem maschinenlesbaren Träger gespeicherten Programm zur Durchführung eines Verfahrens nach einem der vorhergehenden Ansprüche, wenn das Programm auf einem Rechner abläuft.

## Claims

1. Method for the computer-assisted open-loop and/or closed-loop control of a technical system (T), wherein the open-loop and/or closed-loop control carries out, at respective times, actions (a) comprising one or more action variables at the technical system (T) as a function of one or more states (x) of the technical system (T), comprising in each case one or more state variables, wherein:
a) a predefined regulating method (CO1, CO2) determines, at respective times, first actions (a1) which are to be carried out on the technical system (T), as a function of at least the state (x) of the technical system (T) at the respective time;
b) at least one exploration rule (EP) determines one or more second actions (a2) to be carried out on the technical system (T) as a function of at least the state (x) of the technical system (T) at the respective time in order to explore states which states which have not yet been assumed by the technical system (T);
c) a set of resulting subsequent states (x') of the technical system (T) is predicted on the basis of a simulation model (SM) of the technical system (T) for each second action (a2) ;
d) it is checked for each set of subsequent states (x') whether the respective set of subsequent states (x') satisfies a predefined threshold value criterion which defines thresholds which are to be complied with for at least one portion of the state variables of the respective set of subsequent states (x');
e) if one or more sets of subsequent states (x') satisfy the threshold value criterion, a second action (a2) is supplied to the predefined regulating method (CO1, CO2) for which second action (a2) the predicted set of subsequent states (x') satisfies the threshold value criterion, after which the predefined regulating method (CO1, CO2) carries out, as an action, the supplied second action (a2) instead of the first action (a1) or the first action (a1), determined in step a), in combination with the second action (a2) at the technical system (T).

2. Method according to Claim 1, in which, in the event of none of the sets of subsequent states (x') in step e) satisfying the threshold value criterion, the predefined regulating method (CO1, CO2) carries out the first action (a1) determined in step a) and/or one or more modified second actions (a2) are determined, for which actions (a2) the steps c) to e) are executed and/or the steps b) to e) are executed once more.

3. Method according to Claim 1 or 2, in which the second actions (a2) determined in step b) each constitute a variation of the first action (a1) determined in step a), and in step e) the first action (a1) which was varied by means of the variation with respect to the supplied second action (a2) is carried out as action (a) at the technical system (T).

4. Method according to one of the preceding claims, in which the threshold value criterion specifies, for at least a portion of the state variables of the subsequent states (x'), respective value ranges within which the values of these state variables must lie.

5. Method according to Claim 4, **characterized in that** the value ranges depend on the values of the state variables of the subsequent states (x'), and define, in particular, a percentage deviation from these values.

6. Method according to one of the preceding claims, in which the at least one exploration rule (EP) comprises one or more of the following rules:
- a rule which randomly selects the second action (a2);
- a rule which is based on expert knowledge; and
- an ε greedy rule.

7. Method according to one of the preceding claims, in which the simulation model (SM) is learnt with a machine learning method, and is based, in particular, on a learnt neural network, preferably a recurrent neural network.

8. Method according to one of the preceding claims, in which the predefined regulating method is one of the following methods:
- a table-based regulating method (CO1) in which respective states (x) of the technical system (T) are assigned to first actions (a1) by means of a table;
- an action selection rule (CO2) which is learnt with a machine learning method;
- a combination of a table-based regulating method (CO1) and an action selection rule (CO2) which is learnt with a machine learning method, wherein the action selection rule preferably specifies a variation of an action (a0) which is determined with the table-based regulating method (CO1), and the first action (a1) is preferably that action of the table-based regulating method (CO1) which is varied by means of the variation.

9. Method according to one of the preceding claims, in which the technical system (T) is a gas turbine and/or wind turbine.

10. Method according to Claim 9, in which a state (x) of the gas turbine comprises one or more of the following state variables:
- the temperature and/or the pressure at one or more locations on the gas turbine, in particular the ambient temperature and/or the ambient pressure and/or the compressor temperature and/or the compressor pressure and/or the temperature in the combustion chamber and/or the pressure in the combustion chamber;
- the air humidity at one or more locations on the gas turbine;
- the combustion chamber accelerations in the gas turbine;
- the emission of pollutants by the gas turbine, in particular the emission of nitrogen oxide; and
- the power generated by the gas turbine.

11. Method according to Claim 9 or 10, in which the action variable or action variables of the first and/or second actions (a) to be carried out at the gas turbine comprise a change in the setting of one or more fuel injection valves and/or a change in the position of one or more vanes and/or a change in one or more cooling air streams in the gas turbine.

12. Method according to Claim 10 or 11, in which the state variable or state variables in step d) for which thresholds which are to be complied with are defined comprise the combustion chamber accelerations in the gas turbine and/or the emission of pollutants by the gas turbine.

13. Method according to one of Claims 9 to 12, in which a state (x) of the wind turbine comprises one or more of the following state variables:
- the temperature and/or the pressure and/or the air humidity at one or more locations on the wind turbine, in particular the ambient temperature and/or the ambient pressure and/or the ambient air humidity;
- the strength of the wind at the wind turbine;
- the amplitude of the oscillations of the tower of the wind turbine;
- the mechanical loading of the rotor blades of the wind turbine; and
- the power generated by the wind turbine.

14. Method according to one of Claims 9 to 13, in which the action variable or action variables of the first and/or second actions (a) to be carried out at the wind turbine comprise a change in the angles of attack of the rotor blades of the rotor of the wind turbine and/or a change in the orientation of the rotor of the wind turbine with respect to the wind.

15. Method according to Claim 13 or 14, in which the state variable or state variables in step d) for which thresholds which are to be complied with are defined comprise the amplitude of the oscillations of the tower of the wind turbine and/or the mechanical loading of the rotor blades of the wind turbine.

16. Computer program product having a program which is stored on a machine-readable carrier, for executing a method according to one of the preceding claims when the program runs on a computer.

## Revendications

1. Procédé de commande et/ou de régulation assistée par ordinateur d'un système (T) technique, dans lequel la commande et/ou la régulation effectue à chaque instant des actions (a) comprenant une ou plusieurs variables d'action sur le système (T) technique, en fonction d'un ou de plusieurs états (x) du système (T) technique, comprenant respectivement une ou plusieurs variables d'état, dans lequel :
a) un procédé (CO1, CO2) donné à l'avance de réglage détermine des premières actions (a1) à effectuer sur le système (T) technique à des instants respectifs, en fonction d'au moins l'état (x) du système (T) technique à l'instant respectif ;
b) au moins une règle (EP) d'exploration détermine une ou plusieurs deuxièmes actions (a2) à effectuer sur le système (T) technique, en fonction d'au moins l'état (x) du système (T) technique à l'instant respectif, pour explorer des états, qui n'ont pas encore été pris par le système (T) technique ;
c) en se fondant sur un modèle (SM) de simulation du système (T) technique, on prédit pour chaque deuxième action (a2) un ensemble d'états (x') qui s'ensuivent, qui en résultent, du système (T) technique ;
d) pour chaque ensemble d'états (x') qui s'ensuivent, on contrôle si l'ensemble respectif d'états (x') qui s'ensuivent satisfait un critère donné à l'avance de valeur de seuil, qui fixe des seuils à respecter par au moins une partie des variables d'état de l'ensemble respectif d'états (x') qui s'ensuivent ;
e) si un ou plusieurs ensembles d'états (x') séquentiels satisfont le critère de valeur de seuil, on apporte au procédé (CO1, CO2) donné à l'avance de réglage, une deuxième action (a2), pour laquelle l'ensemble prédit d'états (x') séquentiels satisfait le critère de valeur de seuil, après quoi le procédé (CO1, CO2) donné à l'avance de réglage effectue comme action la deuxième action (a2) apportée au lieu de la première action (a1) ou la première action (a1) déterminée au stade a) en combinaison avec la deuxième action (a2) sur le système (T) technique.

2. Procédé suivant la revendication 1, dans lequel, dans le cas où aucun des ensembles d'états (x') séquentiels au stade e) ne satisfait le critère de valeur de seuil, le procédé (CO1, CO2) donné à l'avance de réglage effectue la première action (a1) déterminée au stade a) et/ou on détermine une ou plusieurs deuxièmes actions (a2) modifiées pour lesquelles les stades c) à e) sont effectués et/ou on effectue encore une fois les stades b) à e) .

3. Procédé suivant la revendication 1 ou 2, dans lequel les deuxièmes actions (a2) déterminées au stade b) représentent chacune une variation de la première action (a1) déterminée au stade a) et au stade e), on effectue sur le système (T) technique comme action (a) la première action (a1) modifiée au moyen de la variation de la deuxième action (a2) apportée.

4. Procédé suivant l'une des revendications précédentes, dans lequel le critère de valeur de seuil pour au moins une partie des variables d'état des états (x'), qui s'ensuivent, indique respectivement des plages de valeurs, dans lesquelles doivent se trouver des valeurs de ces variables d'état.

5. Procédé suivant la revendication 4, **caractérisé en ce que** les plages de valeurs dépendent des valeurs des variables d'états des états (x'), qui s'ensuivent, et définissent notamment un écart en pourcentage à ces valeurs.

6. Procédé suivant l'une des revendications précédentes, dans lequel la au moins une règle (EP) d'exploration comprend une ou plusieurs des règles suivantes :
- une règle qui choisit au hasard la deuxième action (a2) ;
- une règle qui repose sur des expertises ;
- une règle ε-greedy.

7. Procédé suivant l'une des revendications précédentes, dans lequel le modèle (SM) de simulation subit un apprentissage par un procédé d'apprentissage automatique et repose notamment sur un réseau neuronal ayant subi un apprentissage, de préférence un réseau neuronal récurrent.

8. Procédé suivant l'une des revendications précédentes, dans lequel le procédé donné à l'avance de réglage est l'un des procédés suivants :
- un procédé (CO1) de réglage reposant sur une table, dans lequel au moyen d'une table, des états (x) respectifs du système (T) technique sont associés à des premières actions (a1) ;
- une règle (CO2) de sélection d'action ayant subi un apprentissage par un procédé d'apprentissage automatique ;
- une combinaison d'un procédé (CO1) de réglage reposant sur une table et d'une règle (CO2) de sélection d'actions ayant subi un apprentissage par un procédé d'apprentissage automatique, la règle de sélection d'action indiquant de préférence une variation d'une action (a0) déterminée par le procédé (CO1) de réglage reposant sur une table et la première action (a1) étant de préférence l'action, modifiée au moyen de la variation, du procédé (CO1) de réglage reposant sur une table.

9. Procédé suivant l'une des revendications précédentes, dans lequel le système (T) technique est une turbine à gaz et/ou une éolienne.

10. Procédé suivant la revendication 9, dans lequel un état (x) de la turbine à gaz comprend une ou plusieurs des variables d'état suivantes :
- la température et/ou la pression en un ou en plusieurs endroits de la turbine à gaz, notamment la température ambiante et/ou la pression ambiante et/ou la température au compresseur et/ou la pression au compresseur et/ou la température dans la chambre de combustion et/ou la pression dans la chambre de combustion ;
- l'humidité de l'air en un ou en plusieurs endroits de la turbine à gaz ;
- des accélérations dans la chambre de combustion dans la turbine à gaz ;
- l'émission de substances polluantes de la turbine à gaz, notamment l'émission d'oxyde d'azote ;
- la puissance produite par la turbine à gaz.

11. Procédé suivant la revendication 9 ou 10, dans lequel la variable d'action ou les variables d'actions des premières ou des deuxièmes actions (a) s'exécutant sur la turbine à gaz comprennent une variation du réglage d'une ou de plusieurs soupapes d'injection de combustible et/ou une variation de la position d'une ou de plusieurs aubes et/ou une variation d'un ou de plusieurs courants d'air de refroidissement dans la turbine à gaz.

12. Procédé suivant la revendication 10 ou 11, dans lequel la variable d'état ou les variables d'état au stade d), pour lesquelles des seuils à respecter sont fixés, comprennent les accélérations dans la chambre de combustion de la turbine à gaz et/ou l'émission de substances polluantes de la turbine à gaz.

13. Procédé suivant l'une des revendications 9 à 12, dans lequel un état (x) de l'éolienne comprend une ou plusieurs des variables d'état suivantes :
- la température et/ou la pression et/ou l'humidité de l'air en un ou en plusieurs endroits de l'éolienne, notamment la température ambiante et/ou la pression ambiante et/ou l'humidité de l'air ambiant ;
- la force du vent sur l'éolienne ;
- l'amplitude des vibrations de la tour de l'éolienne ;
- la charge mécanique des pales de la roue de l'éolienne ;
- la puissance produite par l'éolienne.

14. Procédé suivant l'une des revendications 9 à 13, dans lequel la variable d'action ou les variables d'action des premières et/ou deuxièmes actions (a) s'exécutant sur l'éolienne comprennent une modification de l'angle d'attaque des pales de la roue de l'éolienne et/ou une modification de l'orientation de la roue de l'éolienne par rapport au vent.

15. Procédé suivant la revendication 13 ou 14, dans lequel la variable d'état ou les variables d'états au stade d), pour lesquelles des seuils à respecter sont fixés, comprennent l'amplitude des vibrations de la tour de l'éolienne et/ou la charge mécanique des pales de de la roue de l'éolienne.

16. Produit de programme d'ordinateur comprenant un programme mis en mémoire sur un support déchiffrable par un ordinateur pour effectuer un procédé suivant l'une des revendications précédentes, lorsque le programme se déroule sur un ordinateur.
